Europäisches Patentamt

European Patent Office

Office européen des brevets

(11) Numéro de publication : **0 553 583 A1**

# (12) DEMANDE DE BREVET EUROPEEN

(21) Numéro de dépôt : **92403493.7**

(22) Date de dépôt : **21.12.92**

(51) Int. Cl.$^5$ : **G02B 13/14,** G02B 17/06, G02B 17/00

(30) Priorité : **31.12.91 FR 9116386**

(43) Date de publication de la demande : **04.08.93 Bulletin 93/31**

(84) Etats contractants désignés : **BE DE GB IT NL**

(71) Demandeur : **THOMSON-CSF**
**51, Esplanade du Général de Gaulle**
**F-92800 Puteaux (FR)**

(72) Inventeur : **Rollin, Joel**
**THOMSON-CSF, SCPI, BP 329**
**F-92402 Courbecoie Cedex (FR)**

(74) Mandataire : **Lincot, Georges et al**
**THOMSON-CSF, SCPI, B.P. 329, 50, rue**
**Jean-Pierre Timbaud**
**F-92402 Courbevoie Cédex (FR)**

(54) **Caméra infrarouge à système optique auto-thermalisé.**

(57)    Un système optique optimisé se compose d'un groupe optique d'entrée (1), d'un moyen de transport d'image et d'un groupe de focalisation (C) sur un détecteur (D).

Pour compenser la défocalisation thermique introduite par le groupe optique d'entrée (1), le moyen de transport d'image est constitué d'un système spéculaire à deux miroirs ($M_1$, $M_2$), l'un des deux miroirs ($M_1$) enveloppant l'autre ($M_2$) en créant une ouverture d'entrée et une ouverture de sortie pour respectivement introduire les faisceaux provenant de la scène observée et les projeter vers le groupe de focalisation (C).

Le système de transport d'image est constitué par un système spéculaire de sorte que l'ensemble du système optique est catadioptrique. Ce système spéculaire est formé d'au moins deux miroirs ($M_1$,$M_2$) dont les surfaces se font face, l'une des deux surface enveloppant l'autre. Un tel système de réflexion spéculaire, du type système Hoffner, est connu en soi. Un tel système offre des possibilités, de défocalisation compensatrices lorsqu'il est associé à d'autres transporteurs d'image dioptriques, tout en conservant des matériaux classiques l'aluminium par exemple, pour ses entretoises de maintien.

La contribution positive à la défocalisation thermique apportée par le système spéculaire et ses entretoises de maintien est capitale pour compenser la contribution négative induite par les éléments du système optique situées en amont.

La compensation dépend plus sensiblement du choix opéré pour les coefficients de dilatation des miroirs $M_1$ et $M_2$ que des autres facteurs intervenant dans f et peut donc être ajustée du fait du choix des matériaux constitutifs ; en particulier, cette compensation est atteinte d'autant plus "rapidement" que le coefficient $\alpha_{M1}$ du miroir enveloppant ($M_1$) est supérieur au coefficient $\alpha_{M2}$ de l'autre miroir ($M_2$).

Une étude systématique montre que parmi les matériaux cités en exemple deux couples permettent d'annuler la défocalisation $dl_2$ : il s'agit des couples Ge/ZnS et Ge/ZnSe.

Application à l'athermalisation des caméras infrarouges.

EP 0 553 583 A1

FIG. 2

Le domaine technique de l'invention est relatif à la prise de vue opérant dans les bandes spectrales de transmission infrarouge, en particulier dans la bande spectrale 8 à 12 μm.

L'invention a pour objet une caméra infrarouge à système optique auto-athermalisé.

Une caméra infrarouge se compose schématiquement d'un système optique et d'un détecteur associé généralement à un système opto-mécanique de balayage. Dans un champ de vue limité par son ouverture d'entrée, le flux lumineux provenant de la scène observée traverse le système optique et est projeté par celui-ci sur le détecteur, disposé dans un cryostat présentant un écran froid frontal, pour délivrer un signal vidéo proportionnellement à l'éclairement reçu.

Une architecture "optimisée" d'un système optique de caméra infrarouge offre, dans les versions récentes, une pupille d'entrée frontale et un diaphragme d'ouverture proche de l'écran froid :

- d'une part, une pupille d'entrée située en position frontale permet de placer sur cette pupille un miroir de balayage du détecteur, ou de la ligne de visée de la caméra, de très faibles dimensions ; des miroirs de balayage de dimensions très réduites sont nécessaires, en particulier pour éviter les problèmes mécaniques (inertie, usure) amplifiés par l'utilisation de fréquences de vibration élevées (50 Hertz) dans le cas d'un balayage de détecteur ;
- d'autre part, une pupille de sortie définissant un diaphragme d'ouverture au voisinage de l'écran froid du cryostat où se trouve le détecteur permet de limiter le flux lumineux dit de structure provenant des réflexions parasites sur l'environnement immédiat du détecteur. Le détecteur ne reçoit, dans ces conditions, que le flux lumineux utile provenant de la scène observée.

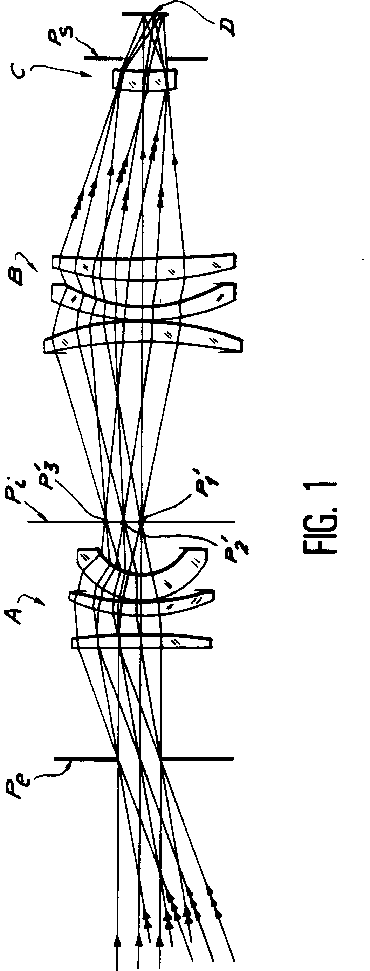

Les combinaisons optiques optimisées apte à fournir de tels positionnements comportent, nécessairement, au moins trois groupes de lentilles comme illustré sur l'exemple de réalisation représenté sur la figure 1 : deux groupes A et B, un objectif d'entrée et un groupe dioptrique formant une combinaison du type système afocal de Képler, pour le transport de la pupille d'entrée du plan $P_e$ vers l'écran froid du cryostat avec formation dune image dans un plan d'image intermédiaire $P_i$, et un groupe C de focalisation sur une barrette détectrice D. Trois points de la scène observée collimatée à l'infini selon trois directions sont conjuguées de capteurs élémentaires de la barrette D via les images intermédiaires P'1, P'2, P'3 situées dans le plan $P_i$. Des rayons caractéristiques matérialisent ces conjugaisons.

Ces combinaisons optiques optimisées comprennent au moins 3 groupes de lentilles généralement en germanium. En effet, le matériau communément utilisé dans les bandes spectrales de transmission infrarouges, en particulier dans la bande 8 à 12 microns, est le germanium du fait de son indice de réfraction élevé et de sa faible dispersion chromatique.

Mais le germanium présente l'inconvénient majeur d'avoir un indice de réfraction fortement variable en fonction de la température.

Pour corriger les défocalisations provoquées par les variations thermiques, des méthodes d'athermalisation active et passive ont été classiquement développées :

- les méthodes actives utilisent un mécanisme de refocalisation par déplacement, dans l'axe optique, d'une lentille ou d'un groupe de lentilles supplémentaire, ou par déplacement de prismes selon une direction orthogonale à cet axe ; ces méthodes, qui nécessitent des précisions de positionnement très importantes, encombrent sensiblement l'architecture opto-mécanique par l'addition d'une mécanique complexe ;
- les méthodes passives consistent en une auto-athermalisation de type optique ou de type mécanique.

L'auto-athermalisation optique, bien connue, est décrite par exemple dans les brevets EP 171903 ou GB 2 121 211. Son principe est de dédoubler les différents groupes optiques en germanium afin d'introduire des éléments constitués de matériaux différents, par exemple Zns (sulfure de zinc), séléniure de zinc (ZnSe) ou GaAs (arséniure de gallium), dont les défocalisations thermiques peuvent compenser celle de la lentille Germanium. Sur l'exemple de la combinaison optimisée illustrée sur la figure 1, comprenant sept lentilles sphériques en germanium réparties sur trois groupes convergents à défocalisation thermique positive, l'auto-athermalisation optique selon ce principe nécessite au moins douze lentilles supplémentaires, car chacun des trois groupes doit être athermalisé indépendamment. Une athermalisation optique est donc peu compatible avec les combinaisons optimisées, la multiplication des dioptres à traverser diminuant sensiblement la transmission optique.

L'auto-athermalisation mécanique est réalisée par des cales dilatables ayant un coefficient de dilatation différent de celui des supports ; le matériau et la longueur de ces cales sont choisis de manière à provoquer des translations compensatrices des lentilles montées sur ces cales. Mais l'amplitude des refocalisations obtenues par cette méthode est très insuffisante.

L'invention vise à supprimer efficacement les défocalisations thermiques dans les caméras infrarouges à système optique optimisé (pupille d'entrée frontale et pupille de sortie proche du détecteur) en évitant les problèmes évoqués plus haut résultant de la mise en oeuvre des méthodes actives ou passives précédemment décrites, en particulier sans addition de mécaniques complexes et délicates, ni de dioptres supplémentaires à traverser.

Pour atteindre cet objectif, l'invention propose une auto-athermalisation du système optique par remplacement du groupe de transport d'image dioptrique à défocalisation positive par un système de transfert à miroirs ; ce système de transfert à miroirs et les entretoises le maintenant par rapport aux groupes optiques d'entrée et de focalisation apportant une défocalisation négative, la défocalisation positive du groupe optique d'entrée peut être compensée en totalité ou, tout au moins, en grande partie.

Plus précisément, l'invention a pour objet une caméra infrarouge à système optique auto-athermalisé, formant une image dune scène observée sur un détecteur disposé dans un cryostat, ayant une pupille d'entrée frontale et une pupille de sortie au voisinage de l'écran froid du cryostat, le système optique comprenant un groupe optique d'entrée définissant un axe optique, un moyen optique de transport d'image, un groupe optique de focalisation sur le détecteur d'axe optique parallèle à celui du groupe d'entrée et des entretoises de maintien entre les différents groupes optiques, la caméra infrarouge étant caractérisée en ce que le système optique comporte comme moyen de transport d'image un ensemble spéculaire à deux miroirs se faisant face, l'un des deux miroirs enveloppant l'autre pour former une ouverture d'entrée et une ouverture de sortie pour les faisceaux lumineux provenant de la scène observée, l'ensemble spéculaire et ses entretoises compensant la défocalisation thermique introduite en amont par le groupe optique d'entrée.

Selon un mode de réalisation, les deux miroirs sont à surfaces courbes, concave et convexe, la surface concave enveloppant la surface convexe, et les rayons de courbure respectifs étant choisis pour former un ensemble optique aplanétique de grandissement -1.

Selon une variante de réalisation l'athermalisation du système optique est complétée par une auto-athermalisation optique du groupe de focalisation obtenue en choisissant, comme éléments constitutifs de ce groupe, une lentille divergente et une lentille convergente, et en choisissant les matériaux constitutifs de ces lentilles de façon à diminuer simultanément et sensiblement la défocalisation et le chromatisme provoqués par le groupe de focalisation.

L'invention sera mieux comprise et d'autres avantages et caractéristiques apparaîtront à la lecture de la description qui suit, faite en référence aux figures annexées qui représentent respectivement :
- la figure 1, un système optique de caméra infrarouge à pupille d'entrée frontale et pupille de sortie proche du détecteur (déjà commentée) ;
- la figure 2, un exemple schématique de réalisation du système optique selon l'invention ;
- la figure 3, le trajet optique d'un rayon lumineux traversant le système spéculaire de ce système optique,
- la figure 4, un schéma de construction optique relative à l'objectif de focalisation du système optique précédent ;
- la figure 5, un autre exemple de réalisation du système optique de la caméra selon l'invention comportant un objectif de focalisation auto-athermalisée.

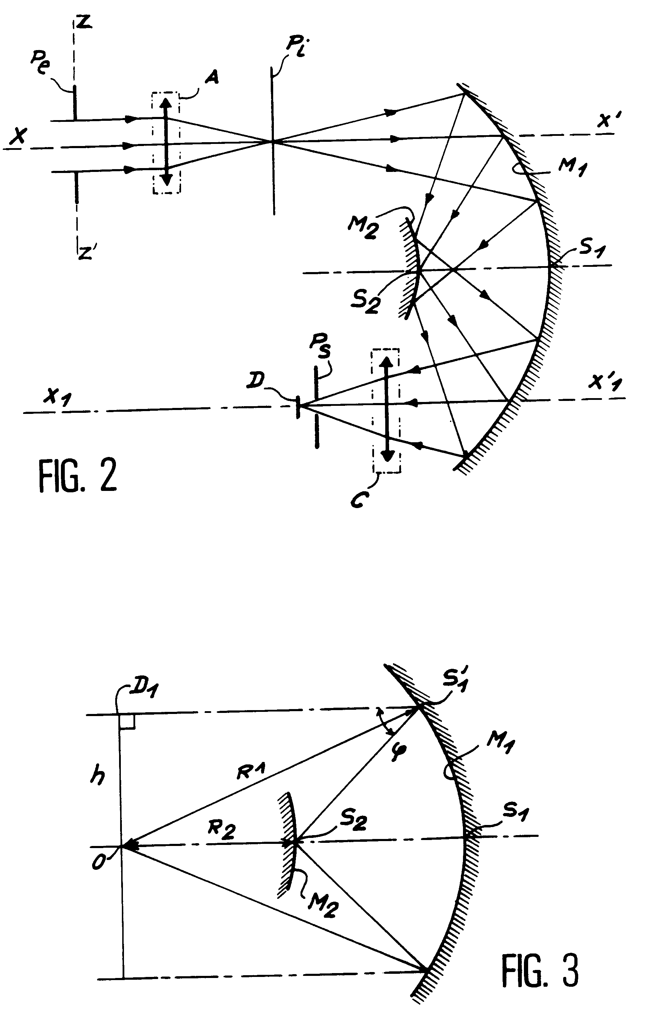

En référence à la figure 2, un exemple schématique de système optique de caméra infrarouge selon l'invention comporte classiquement une pupille d'entrée Pe, un miroir de balayage représenté par son axe de balayage ZZ', un groupe optique d'entrée 1 symbolisé par une simple lentille de tête, un plan d'image intermédiaire $P_I$, un groupe de focalisation 2, une pupille de sortie $P_s$ située dans l'écran froid d'un cryostat et une barrette détectrice D. Ce système optique est maintenu par des supports classiques, non représentés, rigidifiés par des entretoises entre chaque groupe optique.

L'addition entre les deux groupes optiques d'un système de transport d'image permet, comme décrit plus haut, de positionner la pupille d'entrée Pe de manière frontale et la pupille de sortie Ps sur l'écran froid. Les caractéristiques optiques des groupes 1 et 2 compatibles avec ces positionnements sont décrits ci-après.

Selon l'invention, le système de transport d'image est constitué par un système spéculaire de sorte que l'ensemble du système optique est catadioptrique. Ce système spéculaire est formé d'au moins deux miroirs dont les surfaces se font face, l'une des deux surfaces enveloppant l'autre. Un tel système de réflexion spéculaire, du type système Hoffner, est connu en soi et ses caractéristiques ont déjà été décrites, par exemple dans un article de Akiyoshi Suzuki paru au Journal Applied Optics vol. 22, n° 24, le 15. 12. 1983. Cependant, ce type de système de réflexion n'a jamais été utilisé pour résoudre des problèmes de type défocalisation alors que, comme nous le verrons plus loin, un tel système offre des possibilités de défocalisation compensatrices lorsqu'il est associé à d'autres transporteurs d'image dioptriques, tout en conservant des matériaux classiques l'aluminium par exemple, pour ses entretoises de maintien.

Dans l'exemple illustré sur la figure 2, le système spéculaire de transport d'image est représenté sous la forme de deux miroirs $M_1$ et $M_2$ disposés en face l'un de l'autre ; le miroir concave $M_1$ enveloppe le miroir convexe $M_2$ et l'ensemble des deux miroirs présente un axe de symétrie passant par les deux sommets $S_1$ et $S_2$ des miroirs. De par sa nature, ce système spéculaire renvoie les rayons lumineux dans la direction opposée à la direction incidente, si bien qu'un système globalement catadioptrique comme celui de la figure 2 ne comporte pas un axe optique unique, contrairement au système dioptrique classique illustré sur la figure 1 : un faisceau lumineux provenant d'un point de la scène observée, supposée collimatée à l'infini, est représenté sur la figure 2 par trois rayons caractéristiques à simple flèche ; il traverse la pupille d'entrée Pe et est réfléchi par le miroir de balayage d'axe ZZ' parallèlement à l'axe optique XX' du groupe optique A avant de former une image intermédiaire dans le plan $P_i$ du fait de la traversée du groupe A ; le faisceau pénètre ensuite dans le système spéculaire par une ouverture d'entrée située entre les deux miroirs ; il est alors réfléchi sur le miroir $M_1$, puis sur le miroir $M_2$, et de nouveau sur le miroir $M_1$ ; au sortir du système spéculaire par une ouverture de sortie symétrique de l'ouverture d'entrée, il se trouve enfin projeté au centre de la barrette détectrice D par la traversée du groupe de focalisation C d'axe optique $X'_1 X_1$ parallèle à l'axe XX'.

Le système catadioptrique illustré sur la figure 2 présente plus précisément les caractéristiques optiques et géométriques suivantes :
- le groupe optique d'entrée 1 a un champ de vue de 40°, avec une faible ouverture (f/3) ; il est composé d'une lentille de tête et d'une lentille de champ en séléniure de zinc, située à proximité du plan d'image intermédiaire ;
- le système spéculaire $M_1/M_2$ est de grandissement -1 et aplanétique lorsque les rayons de courbures $R_1$ et $R_2$ des deux miroirs $M_1$ et $M_2$ vérifient, par rapport à des paramètres optiques définis à la figure 3, les relations suivantes :

$$\sin \varphi = \frac{h}{R_2} ;$$

$$\sin \frac{\varphi}{2} = \frac{h}{R_1} ;$$

$$D_1 S'_1 = \frac{h (1 + \cos \varphi)}{\sin \varphi} ;$$

Sur la figure 3 sont représentés le trajet d'un rayon lumineux incident $D_1S'_1$ parallèle à l'axe de symétrie $S_1 S_2$ du système spéculaire formé par les miroirs $M_1$ et $M_2$, O le centre de courbure O du miroir $M_1$ appartenant à l'axe de symétrie $S_1S_2$, le pied $D_1$ de la perpendiculaire issu du point O sur le rayon incident, le point de contact $S'_1$ du rayon incident sur le miroir $M_1$ et $\phi$ l'angle de réflexion du rayon incident ; l'intégration du système spéculaire dans le système optique est réalisée en alignant l'axe de symétrie $S_1S_2$ du système spéculaire sur les axes optiques parallèles XX'et $X_1X'_1$ ;
- le groupe optique de focalisation 2 comporte des lentilles dont les distances focales ont des valeurs calculées pour obtenir la focale d'oculaire désirée et la pupille de sortie $P_s$, diaphragme d'ouverture du détecteur D, proche de l'écran froid.

Dans ces conditions, la contribution positive à la défocalisation thermique apportée par le système spéculaire et ses entretoises de maintien est capitale pour compenser la contribution négative induite par les éléments du système optique situés en amont. En effet, un calcul optique de la défocalisation thermique $dl_1$, induite par le groupe optique d'entrée, réduit pour simplifier à la lentille de tête supposée en germanium, par l'entretoise située entre le groupe d'entrée et le système spéculaire, et par le système spéculaire de transport d'image, s'exprime en fonction d'une variation de température T par une expression du type :

$$dl_1 = \left[ - \frac{f_1}{\eta_1} + f (\alpha_0 , \alpha_{M_1}, \alpha_{M_2}, a) \right] (G)^2 . \delta T$$

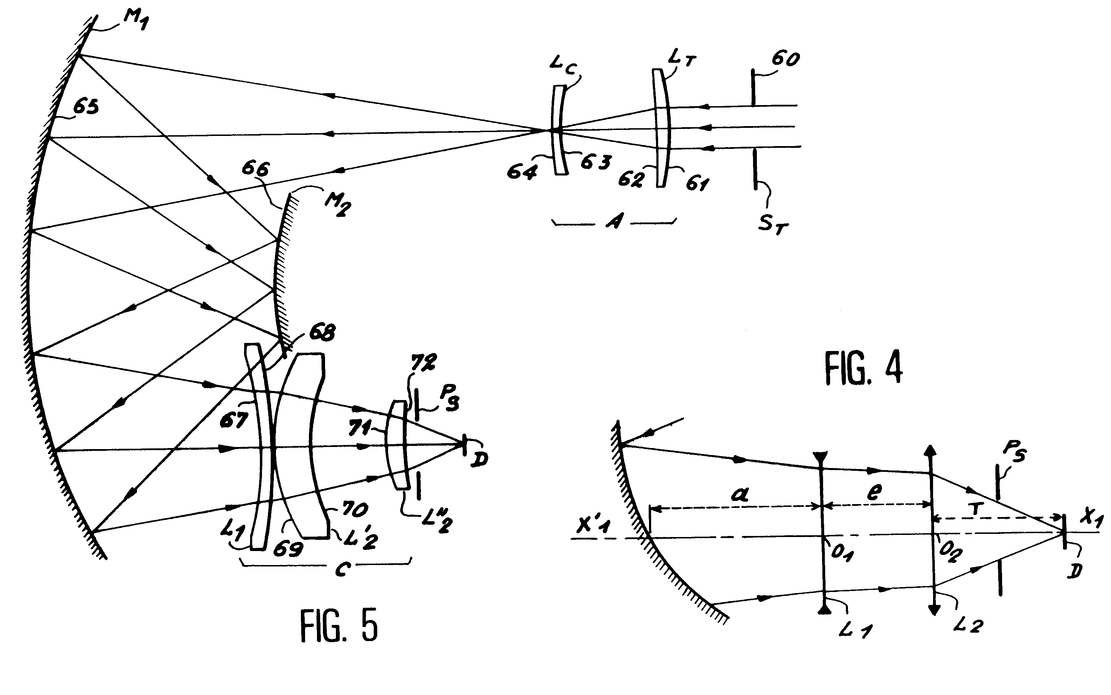

où
$f_1$ est la distance focale de la lentille de tête ;
f est une expression faisant intervenir :
- le coefficient de dilatation $\alpha_0$ des entretoises de maintien
- les coefficients de dilatation $\alpha_{M1}$ et $\alpha_{M2}$ des miroire $M_1$ et $M_2$
- la distance a séparant le miroir $M_2$ du groupe de focalisation (a apparaît sur la figure 4 décrite ci-dessous)
  G = grandissement du groupe de focalisation final
  $\eta$ est un paramètre du type nombre d'Abbe, appliqué à la défocalisation, de la forme :

$$\eta = \cfrac{1}{\left(\cfrac{dn}{n-1} - \alpha\right)}$$

avec n = indice du germanium,

$\alpha$ = coefficient de dilatation du germanium.

L'expression de $dl_1$ se compose de deux termes de signes opposés correspondant respectivement à l'intervention des deux éléments pris en compte : lentille de tête et système spéculaire avec ses entretoises. Des applications numériques montrent alors que le terme de défocalisation positif, introduit par le système spéculaire, peut compenser quasiment le premier terme négatif. La compensation dépend plus sensiblement du choix opéré pour les coefficients de dilatation des miroirs $M_1$ et $M_2$ que des autres facteurs intervenant dans f et peut donc être ajustée du fait du choix des matériaux constitutifs ; en particulier, cette compensation est atteinte d'autant plus "rapidement" que le coefficient $\alpha_{M1}$ du miroir enveloppant $M_1$ est supérieur au coefficient $\alpha_{M2}$ de l'autre miroir $M_2$.

Afin d'auto-athermaliser l'ensemble du système optique, la valeur de $dl_1$ ayant été annulée ou quasiment annulée par la présence du système spéculaire, il reste à annuler la défocalisation thermique $dl_2$ provoquée par le deuxième groupe dioptrique ou groupe de focalisation final. Or la valeur de $dl_2$ dépend du choix de structure et du choix des matériaux utilisés pour ce groupe, compte-tenu de la contrainte de positionnement du diaphragme d'ouverture à situer proche de l'écran froid.

Un exemple de ce groupe de focalisation final répondant à ces contraintes comporte, comme représenté sur la figure 4, deux lentilles L1 et L2, respectivement divergente de distance focale négative $F_1$, et convergente, de distance focale positive $F_2$. Sur cette figure, les rayons extrêmes fléchés du faisceau lumineux proviennent d'un point de la scène situé dans l'axe optique du groupe d'entrée ; ils sont projetés au centre de la barrette détectrice D, symétriquement par rapport à l'axe optique $X_1X'_1$ du groupe optique final, après avoir traversé les lentilles L1 de centre 01 et L2 de centre 02, la pupille de sortie $P_s$ définissant le diaphragme d'ouverture sur la barrette D. Sur la figure 4, les distances des rayons à l'axe optique, au niveau des lentilles $L_1$ et $L_2$, sont référencées $h_1$ et $h_2$, la distance entre les lentilles $L_1$ et $L_2$ est référencée e et la distance de la lentille divergente L1 au miroir $M_1$ mesurée sur l'axe optique est référencée a.

Dans ces conditions, l'expression de la défocalisation thermique due au groupe de focalisation final sur la barrette de détection D est de la forme :

$$dl_2 = -\left[\left(\frac{T}{h_1}\right)^2 \left(\frac{h_1^2}{F_1\eta_1} + \frac{h_2^2}{F_2\eta_2}\right) + e\alpha_2 \, G_2^2\right]\delta T$$

où

T est le tirage optique séparant la lentille $L_2$ du détecteur D (T = $0_2$D)

$G_1$ le grandissement de la lentille $L_1$

$G_2$ le grandissement de la lentille $L_2$

$\alpha_2$, le coefficient de dilatation de l'entretoise située entre les lentilles $L_1$ et $L_2$.

$\eta_1$ et $\eta_2$ représentent le paramètre $\eta$ appliqué respectivement aux matériaux des lentilles $L_1$ et $L_2$.

Pour des valeurs de a et de e déterminées par les contraintes d'encombrement et de positionnement, il est possible de déterminer les distances focales $F_1$ et $F_2$ pour chacun des différents couples de matériaux, du couple de lentilles L1/L2, pris parmi Ge, ZnS et ZnSe, dans le but d'annuler $dl_2$ comme indiqué plus haut.

Une étude systématique montre que parmi les matériaux cités en exemple deux couples permettent d'annuler la défocalisation $dl_2$ ; il s'agit des couples Ge/ZnS et Ge/ZnSe. Puis, classés par ordre décroissant des valeurs minimales correspondantes de la quantité $dl_2$ qui sont négatives, viennent les couples suivants : ZnSe/ZnS ; ZnS/ZnS ; ZnSe/ZnSe ; ZnS/ZnSe ; ZnS/Ge ; ZnSe/Ge et Ge/Ge. Les valeurs minimales de $dl_2$ varient alors respectivement de quelques dizaines à -100 µm pour le dernier couple.

Le choix du couple de matériaux peut aussi être guidé par l'obtention d'une valeur de défocalisation thermique la plus réduite correspondant à l'obtention dune valeur de chromatisme la plus faible. La défocalisation résiduelle qui subsiste alors peut être annulée par d'autres moyens décrits ci-après.

Le chromatisme $d_c$ provoqué par le couple de lentilles L1/L2 a pour expression :

$$d_c = \left(\frac{F}{h_1}\right)^2 \left(\frac{h_1^2}{F_1 v_1} + \frac{h_2^2}{F_2 v_2}\right)$$

$v_1$ et $v_2$ étant les nombre Abbe respectivement pour les lentilles $L_1$ et $L_2$.

Les couples de matériaux rangés par ordre de chromatisme croissant forment la suite suivante : Ge/Ge ; ZnS/ZnSe ; Ge/ZnSe ; ZnSe/Ge ; ZnS/ZnS ; ZnSe/ZnS ; ZnS/Ge et Ge/ZnS. L'optimisation entre les minima de défocalisation et de chromatisme est ainsi vérifiée, au vu des deux listes précédentes, par le couple ZnS/ZnSe.

La figure 5 présente un exemple de réalisation d'une version du système optique dans laquelle la dernière lentille convergente L2 en ZnSe est dédoublée selon deux lentilles L'2 et L"2. Ce dédoublement permet de compenser la faible défocalisation résiduelle par ajustement du coefficient de dilatation de la monture supportant la dernière lentille L"2. Sur la figure 5, les surfaces des éléments suivants sont référencées dans le sens de la lumière : surface ST d'un stop 60, surfaces 61 et 62 de la lentille de tête $L_T$ en Ge, surfaces 63 et 64 d'une lentille de champ $L_C$ en ZnSe, surfaces 65 et 66 des miroirs du système spéculaire $M_1/M_2$, surfaces 67, 68, 69, 70, 71 et 72 des lentilles L1 en ZnS, L'2 et L"2 ou ZnSe du groupe optique de focalisation sur le détecteur D. Les valeurs numériques des rayons de courbure de ces surfaces et des épaisseurs les séparant sont rassemblées dans le tableau suivant :

| Surface | Rayon de courbure du dioptre (mm) | Epaisseur suivante (mm) | Matériau suivant |
|---|---|---|---|
| ST | 14.209 | | |
| 61 | 46.3688 | 1.904 | Ge |
| 62 | 317.484 | 15.433 | |
| 63 | -26.0064 | 1.205 | ZnSe |
| 64 | -60.1099 | 86.190 | |
| 65 | -85.1979 | -40.644 | Miroir |
| 66 | -44.5536 | 40.644 | Miroir |
| 67 | 55.4357 | -1.487 | ZnS |
| 68 | 82.5435 | -0.496 | |
| 69 | -27.3364 | -5.950 | ZnSe |
| 70 | -29.2260 | -12.561 | |
| 71 | -19.9394 | -2.713 | ZnSe |
| 72 | -40.8973 | 9.926 | |

L'invention n'est pas limitée aux formes de réalisation décrites et représentées ; en particulier, la défocalisation résiduelle du groupe de focalisation finale formé de deux lentilles L1 et L2 peut être aisément compensé par les moyens d'athermalisation connu : auto-athermalisation optique par dédoublement des lentilles, avec un choix adapté des matériaux constitutifs, autoathermalisation mécanique par déplacement de la dernière lentille L"2 à partir de cales dilatables.

**Revendications**

1 - Caméra infrarouge à système optique auto-athermalisé, formant une image d'une scène observée sur un détecteur (D) disposé dans un cryostat, ayant une pupille d'entrée (Pe) frontale et une pupille de sortie ($P_S$) au voisinage de l'écran froid du cryostat, le système optique comprenant un groupe optique d'entrée (A) définissant un axe optique (XX'), un moyen optique de transport d'image, un groupe optique de focalisation (C) sur le détecteur (D) d'axe optique parallèle à celui du groupe d'entrée (A) et des entretoises de maintien entre les différents groupes optiques, la caméra infrarouge étant caractérisée en ce que le système optique comporte comme moyen de transport d'image un ensemble spéculaire à deux miroirs ($M_1$, $M_2$) se faisant face, l'un des deux miroirs ($M_1$) enveloppant l'autre pour former une ouverture d'entrée et une ouverture de sortie pour les faisceaux lumineux provenant de la scène observée, l'ensemble spéculaire et ses entretoises compensant la défocalisation thermique introduite en amont par le groupe optique d'entrée.

2 - Caméra infrarouge selon la revendication 1, caractérisée en ce que les coefficients de dilatation des miroirs ($M_1$, $M_2$) sont choisis pour ajuster la compensation de la défocalisation.

3 - Caméra infrarouge selon la revendication 2, caractérisée en ce que le coefficient de dilatation du miroir enveloppant ($M_1$) est supérieur à celui de l'autre miroir ($M_2$).

4 - Caméra infrarouge selon l'une des revendications précédentes, caractérisée en ce que les deux miroirs ($M_1$, $M_2$) ont des surfaces courbes réfléchissantes respectivement concave et convexe, la surface concave enveloppant la surface convexe symétriquement par rapport à un axe passant par leurs sommets ($S_1$, $S_2$) et parallèle aux axes optiques des groupes optiques d'entrée (A) et de focalisation (C), et des rayons de courbure respectifs ($R_1$, $R_2$) ayant des valeurs choisies pour former un ensemble aplanétique de grandissement -1.

5 - Caméra infrarouge selon la revendication 1, caractérisée en ce que le groupe optique de focalisation (2) comporte au moins un couple de lentilles ($L_1$, $L_2$), la première ($L_1$) suivant le sens de propagation de la lumière étant divergente de distance focale $F_1$ et la seconde ($L_2$) convergente de distance focale $F_2$, les matériaux constitutifs de ces lentilles étant choisis parmi le germanium, le sulfure de zinc et le séléniure de zinc pour qu'il existe au moins un couple de valeurs de distance focale ($F_1$, $F_2$) athermalisant le groupe de focalisation (C).

6 - Caméra infrarouge selon la revendication 5, caractérisée en ce que les matériaux des lentilles ($L_1$, $L_2$) sont respectivement le germanium et le sulfure de zinc.

7 - Caméra infrarouge selon la revendication 5, caractérisée en ce que les matériaux des lentilles ($L_1$, $L_2$) sont respectivement le germanium et le séléniure de zinc.

8 - Caméra infrarouge selon la revendication 1, caractérisée en ce que le groupe optique de focalisation (2) comporte un couple de lentilles ($L_1$, $L_2$) la première ($L_1$) suivant le sens de propagation de la lumière étant divergente de distance focale $F_1$ et la seconde ($L_2$) convergente de distance focale $F_2$, les matériaux constitutifs de ces lentilles étant choisis parmi le germanium, le sulfure de zinc et le séléniure de zinc pour que la défocalisation thermique induite et le chromatisme soient simultanément minimisés sous forme résiduelle.

9 - Caméra infrarouge selon la revendication 8, caractérisée en ce que les matériaux des lentilles ($L_1$, $L_2$) sont respectivement le sulfure de zinc et le séléniure de zinc.

10 - Caméra infrarouge selon la revendication 8, caractérisée en ce que la lentille convergente ($L_2$) est dédoublée selon deux lentilles ($L'_2$, $L''_2$), la lentille ($L''_2$) la plus proche du détecteur étant maintenue par un support dont la dilatation thermique compense la défocalisation thermique résiduelle.

11 - Caméra infrarouge selon la revendication 8, caractérisée en ce que la lentille la plus proche du détecteur ($L''_2$) est montée sur des cales dilatables pour auto-athermaliser le groupe optique de focalisation (C).

FIG. 1

EP 0 553 583 A1

FIG. 2

FIG. 3

EP 0 553 583 A1

FIG. 5

FIG. 4

Office européen
des brevets

**RAPPORT DE RECHERCHE EUROPEENNE**

Numero de la demande

EP 92 40 3493

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 030 315 (PILKINGTON)<br>* revendications; figures *<br>--- | 1 | G02B13/14<br>G02B17/06<br>G02B17/00 |
| A | US-A-5 031 976 (D.SHAFER)<br>* revendications; figures *<br>--- | 1 | |
| A | FR-A-2 355 305 (REOSC)<br>--- | 1 | |
| A | US-A-4 453 800 (T.P.FJELDSTED)<br>* revendications; figures *<br>--- | 1 | |
| A | EP-A-0 425 882 (HORIBA)<br>* revendications; figures *<br><br>----- | 1 | |

**DOMAINES TECHNIQUES RECHERCHES (Int. Cl.5)**

G02B

Le présent rapport a été établi pour toutes les revendications

| Lieu de la recherche | Date d'achèvement de la recherche | Examinateur |
|---|---|---|
| LA HAYE | 02 JUILLET 1993 | PFAHLER R. |